# EUROPEAN PATENT SPECIFICATION

(11) **EP 2 716 365 B1**
(45) Date of publication and mention of the grant of the patent: **04.01.2017**
(21) Application number: 12186997.8
(22) Date of filing: 02.10.2012
(51) Int. Cl.: B02C 2/06, F16C 35/02

(54) **Gyratory crusher bearing**
Kreiselbrecherlager
Palier de concasseur giratoire

(43) Date of publication of application: 09.04.2014
(73) Proprietor: Sandvik Intellectual Property AB, 811 81 Sandviken (SE)
(72) Inventor: Malmqvist, Patric, 233 33 Svedala (SE); Eriksson, Bengt-Arne, 233 33 Svedala (SE); Larsson, Mikael M., 241 33 Eslöv (SE)

(56) References cited:
- BE-A- 380 542
- US-A- 1 402 255
- US-A- 5 934 583

## Description

### Field of invention

The present invention relates to a gyratory crusher bearing for positioning at an upper region of a crusher main shaft, the bearing configured to support gyration of the main shaft about its longitudinal axis.

### Background art

Gyratory crushers are used for crushing ore, mineral and rock material to smaller sizes. Typically, the crusher comprises a crushing head mounted upon an elongate main shaft. A first crushing shell is mounted on the crushing head and a second crushing shell is mounted on a frame such that the first and second crushing shells define together a crushing gap through which the material to be crushed is passed. A driving device is arranged to rotate an eccentric assembly about the lower portion of the shaft so as to cause the crushing head to perform a gyratory pendulum movement and crush the material introduced in the crushing gap.

The main shaft is typically supported at both its upper and lower ends. Various different types of lower bearing assemblies have been proposed. In particular, US 2009/0008489 discloses a hydraulically adjustable cone crusher in which an axial bearing assembly comprises a hydraulic adjustment cylinder for adjusting the setting of the crusher. US 4,919,349 discloses a gyratory crusher having a dual seal arrangement that utilises forced air and a gasket arrangement to block contaminants entering the crusher. SU 897280 describes a cone crusher that has a step cup bearing to absorb and transmit the crushing force of the crusher head.

The crusher main shaft is also journalled at its uppermost end by a top bearing. An example top bearing is disclosed in US 1,748,102 in which a wear ring is retained in an intermediate position between a sleeve surrounding the main shaft and a floating bushing positioned against a central boss of a supporting spider forming a part of the gyratory crusher topshell. US 5,934,583 discloses a bearing block mounting arrangement for a cone crusher in which an oil seal and a dust ring are retained at a lower region of the spider boss by a ring holder accommodated within a cavity at the spider boss. BE 380542 and US 1,402,255 disclose further examples of top bearing assemblies to support the gyratory pendulum movement of the crusher main shaft.

Due to the high performance demands of modem crushers, appreciable wear is a common problem underneath the housing of the top bearing at the region of the topshell. This wear requires operators to weld the worn region which changes the bearing surface and indeed the bearing location. This in turn creates stress concentrations at the bearing and the topshell support frame, which in turn results in accelerated wear of various components and ultimately damage to the crusher.

There is therefore a need for an improved top bearing for a gyratory crusher that avoids premature wear of the support housing at the topshell.

### Summary of the Invention

It is an object of the present invention to provide a gyratory crusher bearing that protects the top bearing housing from wear caused by the gyratory pendulum movement of the main shaft at the topshell.

The objective is achieved by providing a wear part bearing or wear ring releasably attachable to an upper region of the topshell frame that is capable of effectively and efficiently absorbing and transmitting frictional forces imparted by contact with the gyrating main shaft. The bearing of the present invention is configured for positioning at a lower region of a central boss of the support spider that extends across the topshell of the gyratory crusher frame and is positioned about the uppermost end of the main shaft. The present bearing is releasably attached to the support spider at the central boss and is mounted rigidly so as to effectively absorb and transmit the torque forces induced by the main shaft. As the bearing is anchored at the support spider via a mounting that is distributed circumferentially over the bearing, any unwanted stress concentrations at the bearing housing are obviated.

According to a first aspect of the present invention there is provided a gyratory crusher annular bearing mountable at a lower annular face of a central boss of a spider and about an outer surface of an upper region of a gyratory crusher main shaft, the bearing comprising: an annular disc-like body to project radially outward from the main shaft, the body having a bearing surface for positioning around the outer surface of the main shaft; a mounting surface for mounting at the lower annular face of the central boss; a plurality of holes spaced circumferentially around and extending through the body from the mounting surface to receive anchorage bolts for releasable attachment of the bearing to the central boss; characterised by: a flange positioned towards an inner radius of the bearing and projecting from and extending transverse or perpendicular to the disc-like body, the flange having a bearing surface for positioning around the outer surface of the main shaft and a mounting surface for positioning in contact with an inward facing surface of the central boss; wherein an uppermost region of the flange is adapted to mount a sealing gasket between the main shaft and the central boss.

Optionally, the bearing further comprises an annular shoulder extending radially inward from the disc-like body. Optionally, an uppermost region of the flange comprises an annular seating neck to mount a sealing gasket between the main shaft and the central boss. Optionally, the bearing comprises eight bore holes evenly spaced circumferentially around the annular disc-like body. Optionally, the bearing may comprise upwardly extending projections configured to engage into grooves or channels recessed at the frame part for releasable attachment. According to further embodiments, the bearing comprises screw threads configured to cooperate with corresponding screw threads formed on the frame part to allow the bearing to be rotated and screwed into substantially fixed position at the frame part.

According to a second aspect of the present invention there is provided a gyratory crusher comprising: a frame defining an internal crushing zone, the frame having an upper frame and a lower frame; the upper frame having a support spider with a central boss; a rotatably mounted main shaft extending through the crushing zone, an upper region of the main shaft supported within the central boss; and an annular bearing as claimed herein mounted at the lower annular face of the central boss to be positioned below the central boss and extending about the outer surface the main shaft.

Preferably, the bearing is releasably mounted in contact with the lower annular face to the central boss. Preferably, the crusher may further comprise a plurality of bolts to secure the bearing to the lower annular face of the central boss. Preferably, the bearing is attached directly to the lower annular face of the central boss. Alternatively, the bearing maybe attached to the frame part via an intermediate mounting that is in turn releasably or permanently attached to the frame part. The intermediate mounting maybe configured to allow the bearing to be releasably clipped and unclipped at the frame part via conventional interconnections including for example male and female connections, tongue and groove and snap-click connections.

Preferably, the bearing is positioned at an axially lowermost end of the central boss relative to a longitudinal axis extending through frame.
Optionally, at least part of the bearing surface is aligned transverse to the outer surface of the main shaft and is inclined inwardly in a direction from a lower region to an upper region of the main shaft.

Preferably, the crusher further comprises a top bushing and a sealing gasket, the sealing gasket positioned, in the axial direction of main shaft, intermediate the top bushing and the annular bearing.

### Brief description of drawings

A specific implementation of the present invention will now be described by way example only and with reference to the following drawings in which:
Figure 1 is a cross-sectional side view of a gyratory crusher having a main shaft supported at its upper end by a top bearing assembly mounted about the upper end of the main shaft according to a specific implementation of the present invention;
Figure 2 is a magnified view of the upper region of the crusher main shaft and bearing assembly of the gyratory crusher of figure 1;
Figure 3 is an underside perspective view of the bearing of figure 2;
Figure 4 is an upper perspective view of the bearing of figure 3;
Figure 5 is a cross-sectional side view of an upper region of a crusher main shaft and a bearing assembly of a gyratory crusher according to a further specific implementation of the present invention.

### Detailed description of preferred embodiment of the invention

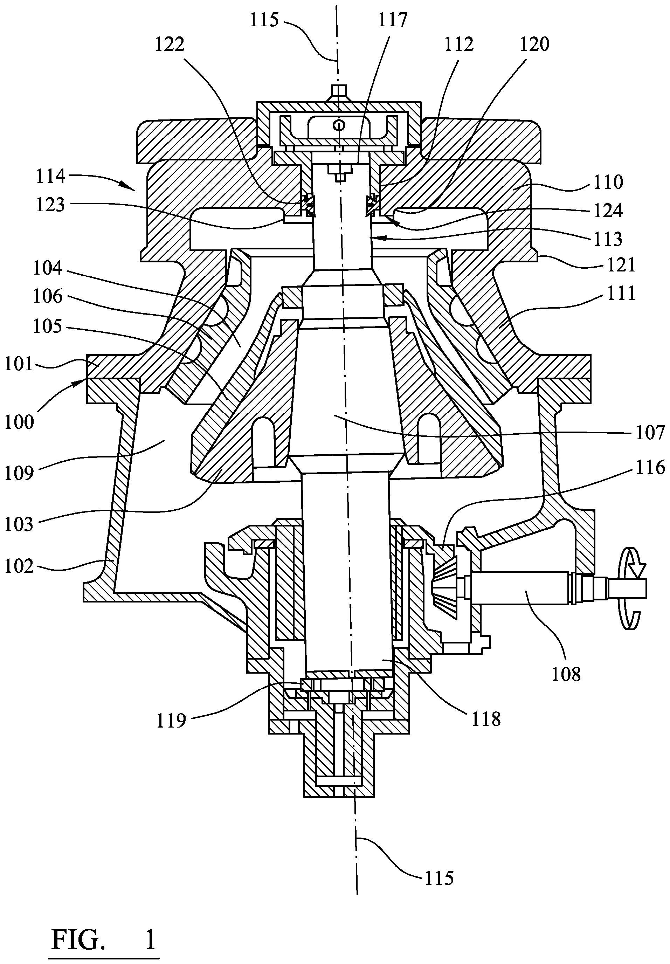

Referring to figure 1, a crusher comprises a frame 100 having an upper frame 101 and a lower frame 102. A crushing head 103 is mounted upon an elongate shaft 107. A first crushing shell 105 is fixably mounted on crushing head 103 and a second crushing shell 106 is fixably mounted at top frame 101. A crushing zone 104 is formed between the opposed crushing shells 105, 106. A discharge zone 109 is positioned immediately below crushing zone 104 and is defined, in part, by lower frame 102.

Upper frame 101 is further divided into a topshell 111, mounted upon lower frame 102 (alternatively termed a bottom shell), and a support spider 114 that extends from topshell 111 and represents an upper portion of the crusher. The spider 114 comprises two diametrically opposed arms 110 that extend radially outward from a central boss 120 positioned on a longitudinal axis 115 extending through frame 100 and the gyratory crusher generally. Arms 110 are attached to an upper region of topshell 111 via an intermediate annular flange 121 that is centred around longitudinal axis 115. Typically, arms 110 and topshell 111 form a unitary structure and are formed integrally.

A drive (not shown) is coupled to main shaft 107 via a drive shaft 108 and suitable gearing 116 so as to rotate shaft 107 eccentrically about longitudinal axis 115 and to cause crushing head 103 to perform a gyratory pendulum movement and crush material introduced into crushing gap 104. An upper end region of a shaft 113 comprises a cylindrical outer surface 113. A very uppermost end 117 of shaft 107 is maintained in an axially rotatable position by a top bushing 112 positioned intermediate main shaft region 113 and an upper region of central boss 120. Similarly, a bottom end 118 of shaft 107 is supported by a bottom-end bearing assembly 119.

Gyrational movement of shaft 107 is further supported by an annular bearing 123 mounted at a lower region of central boss 120. Bearing 123 is secured to the lower annular face 124 of boss 120 and is retained in a substantially fixed position relative to moveable shaft 107. Bearing 123, in turn, provides a mount for a sealing gasket 122 positioned intermediate bearing 123 and top bushing 112 in the longitudinal axis direction 115.

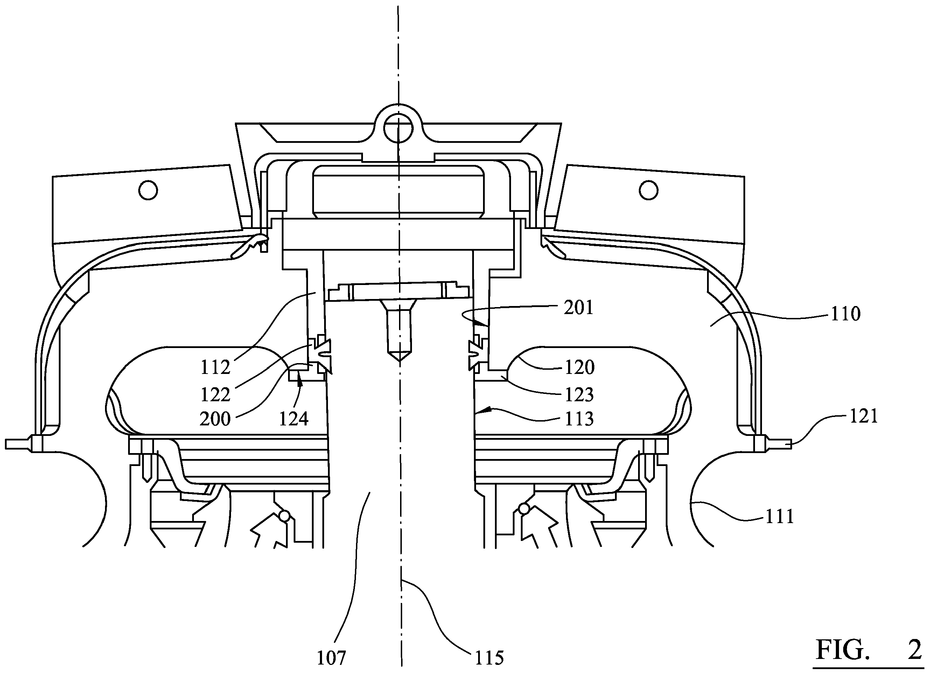

Referring to figure 2, bearing 123 comprises a generally annular disc-like body with an annular flange 200 extending upwardly from the disc-like body in the axial direction 115. With this configuration, the main body of bearing 123 is positioned directly below boss 120 whilst flange 200 is positioned in a radial direction intermediate a lower region of boss 200 and the outer surface 113 of shaft 107. Bearing 123 may be considered to represent a lowermost complement part of a top-end bearing assembly. That is, the intermediate sealing gasket 122 is effectively sandwiched between top bushing 112 and the annular disc-like bearing 123.

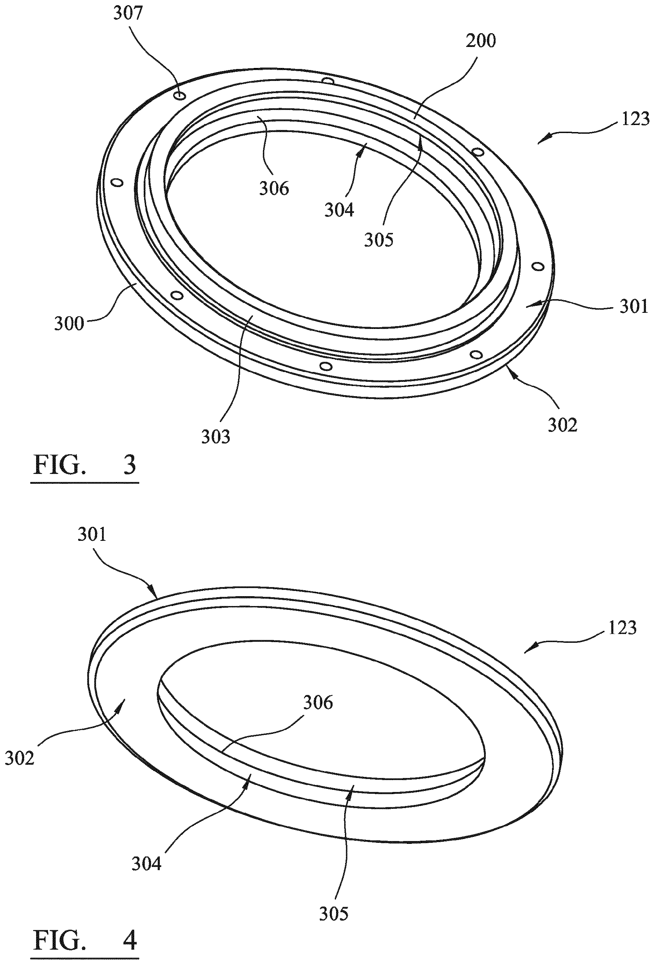

Referring to figures 3 and 4, bearing 123 comprises a bearing surface 304, 305 intended to be positioned towards, and in mating contact with, outer surface 113 of main shaft 107. According to the specific implementation, bearing surface 304, 305 is divided in the axial direction into two halves by a shoulder 306 that projects radially inward from axially projecting flange 200. Shoulder 306 provides a means to seat the intermediate sealing gasket 122 in close fitting contact adjacent outer surface 113 of main shaft 107.

Flange 200 projects perpendicular to the main disc-like body 300 of bearing 123 towards its radially innermost circumferential edge. Disc-like body 300 comprises a first upward facing surface 301 and an opposed downward facing surface 302 when bearing 123 is mounted in position during normal use at boss surface 124. A plurality of bore holes 307 extend through disc-like body 300 and are uniformly distributed circumferentially around body 300. Bore holes 307 are sized to receive suitable anchorage bolts for releasable attachment of bearing 123 to central boss 120. Flange 200 comprises a short cylindrical configuration having a mounting surface 303 orientated to be outward facing relative to longitudinal axis 115. Cylindrical surface 303 and upward facing annular surface 301, in combination, provide mounting surfaces for positioning in contact with the lowermost region 124 of central boss 120. That is, surface 303 is configured for positioning in contact with the inward facing cylindrical surface 201 of boss 120 and annular surface 301 is configured for positioning against annular surface 124 of boss 120.

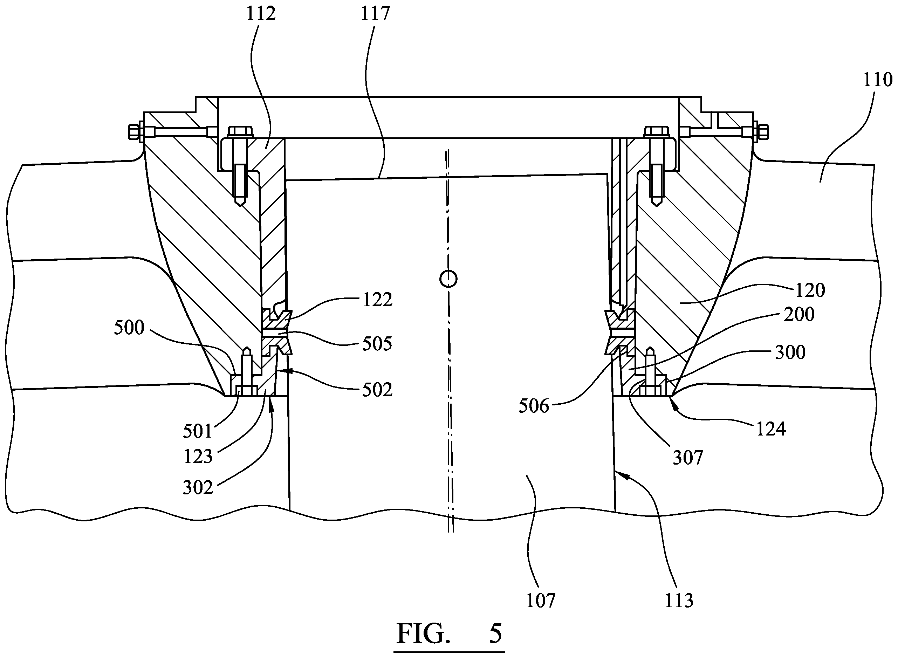

Figure 5 illustrates a further specific implementation of the present invention. Bearing 123 according to the further embodiment is configured to sit, at least partially, within a recess 500 machined into the underside surface 124 of boss 120. Bearing 123 comprises the same disc-like main body 300 as illustrated in figures 3 and 4. An axially extending flange 200 also extends from the radially innermost region of main body 300. Figure 5 further illustrates bearing 123 secured in substantially stationary position at boss 120 via a plurality of attachment bolts 501 secured through the through-bores 307 and embedded upwardly into the lower region of boss 120, as with the embodiment described with reference to figures 1 to 4. When attached in position, the bearing surface 502 of bearing 123 tappers radially inward in a direction from a lower to upper end of the main shaft 107. An upper region 506 of flange 200 comprises a neck portion to interface and mount the sealing gasket 122. Gasket 122 is further retained in position by a stop projection 505. Sealing gasket 122 is further retained in position by top bushing 112 that is in turn mounted in stationary position at boss 120.

As the lower surface 124 of boss 120 is machined to create the annular stepped region 500, entire bearing 123 is capable of mounting within the outer profile of boss 120 such that the downward facing surface 302 of bearing 123 is aligned coplanar with the lowermost downward facing surface 124 of boss 120. As will be appreciated, the embodiment described with reference to figures 1 to 4 may also comprise a boss 120 having a machined and lowermost recessed region 500 to accommodate at least a part of bearing 123.

Referring to both embodiments, and in use, bearing 123 is configured to absorb and transmit to spider 114, and ultimately into topshell 111, the torsional forces induced by the rotating main shaft 107. Positioning bearing 123 at the lowermost region of boss 120 effectively protects the lowermost surface 124 from wear which would otherwise require repair, typically involving welding. Via attachment of bearing 123 to boss 120 using releasable bolts 501, bearing 123 and gasket 122 maybe quickly and conveniently removed and replaced to ensure continued optimum performance of the entire crusher.

According to further specific embodiments, bearing 123 maybe retained in a substantially fixed position at a lower region of boss 120 by any suitable releasable attachment assembly including in particular cooperating screw threads provided at bearing 123 and boss 120. Further, an intermediate mounting part maybe secured to boss 120 to form a mount for bearing 123. Bearing 123 maybe releasably held at the intermediate mounting by any suitable attachment means including bolts, pins, screws or screw threads. Alternatively, bearing 123 maybe releasably clipped in position at the intermediate mounting.

## Claims

1. A gyratory crusher annular bearing (123) mountable at a lower annular face (124) of a central boss (120) of a spider (114) and about an outer surface (113) of an upper region of a gyratory crusher main shaft (107), the bearing (123) comprising:
an annular disc-like body (300) to project radially outward from the main shaft (107), the body (300) having a bearing surface (304) for positioning around the outer surface (113) of the main shaft (107) and a mounting surface (301) for mounting at the lower annular face (124) of the central boss (120);
a plurality of holes (307) spaced circumferentially around and extending through the body (300) from the mounting surface (301) to receive anchorage bolts for releasable attachment of the bearing (123) to the central boss (120);
**characterised by**:
a flange (200) positioned towards an inner radius of the bearing (123) and projecting from and extending transverse or perpendicular to the disc-like body (300), the flange (200) having a bearing surface (305) for positioning around the outer surface (113) of the main shaft (107) and a mounting surface (303) for positioning in contact with an inward facing surface (201) of the central boss (120);
wherein an uppermost region of the flange (200) is adapted to mount a sealing gasket (122) between the main shaft (107) and the central boss (120).

2. The bearing as claimed in claim 1 comprising an annular shoulder (306) extending radially inward from the disc-like body (300).

3. The bearing as claimed in claims 1 or 2 wherein an uppermost region of the flange (200) comprises an annular seating neck (506) to mount the sealing gasket (122) between the main shaft (107) and the central boss (120).

4. The bearing as claimed in claim 1 wherein the bearing surface tapers radially inward in a direction from a lower to an upper end of the main shaft (107).

5. A gyratory crusher comprising:
a frame (100) defining an internal crushing zone (104), the frame (100) having an upper frame (101) and a lower frame (102);
the upper frame (101) having a support spider (114) with a central boss (120);
a rotatably mounted main shaft (107) extending through the crushing zone (104), an upper region of the main shaft (107) supported within the central boss (120); and
an annular bearing (123) as claimed in any preceding claim mounted at the lowermost surface (124) of the central boss (120) to be positioned below the central boss (120) and extending about the outer surface (113) the main shaft (107).

6. The crusher as claimed in claim 5 wherein the bearing (123) is releasably mounted in contact with the lowermost surface (124) to the central boss (120).

7. The crusher as claimed in claim 6 comprising a plurality of bolts (501) to secure the bearing (123) to the lowermost surface (124) of the central boss (120).

8. The crusher as claimed in any one of claims 5 to 7 wherein the bearing (123) is attached directly to the lowermost surface (124) of the central boss (120).

9. The crusher as claimed in any one of claims 5 to 8 wherein the bearing (123) is positioned at an axially lowermost end of the central boss (120) relative to a longitudinal axis (115) extending through frame (100).

10. The crusher as claimed in any one of claims 5 to 9 wherein at least part of the bearing surface (304, 305) is aligned transverse to the outer surface (113) of the main shaft (107) and is inclined inwardly in a direction from a lower region (118) to an upper region (117) of the main shaft (107).

11. The crusher as claimed in any one of claims 5 to 10 further comprising a top bushing (112) and a sealing gasket (122), the sealing gasket (122) positioned, in the axial direction of main shaft (107) intermediate the top bushing (112) and the annular bearing (123).

## Patentansprüche

1. Ringförmiges Lager (123) eines Kreiselbrechers, welches an eine untere ringförmige Fläche (124) eines zentralen Vorsprungs (120) eines Armsterns (114) und um eine äußere Oberfläche (113) eines oberen Bereichs einer Hauptwelle (107) des Kreiselbrechers herum befestigbar ist, wobei das Lager (123) umfasst:
einen ringförmigen scheibenartigen Körper (300), welcher radial von der Hauptwelle (107) hervorsteht, wobei der Körper (300) eine Auflagefläche (304) zum Anordnen um die äußere Oberfläche (113) der Hauptwelle (107) herum und eine Befestigungsfläche (301) zum Anbringen an der unteren ringförmigen Fläche (124) des zentralen Vorsprungs (120) aufweist;
eine Vielzahl von Löchern (307), welche sich in Umfangsrichtung um den Körper (300) herum verteilen und sich von der Befestigungsfläche (301) durch den Körper (300) zur Aufnahme von Ankerbolzen erstrecken, sodass das Lager (123) an dem zentralen Vorsprung (120) lösbar befestigbar ist;
**gekennzeichnet durch**:
einen Flansch (200), welcher zu einem inneren Radius des Lagers (123) hin positionierbar ist und von dem scheibenartigen Körper (300) vorsteht und sich quer oder senkrecht zu dem scheibenartigen Körper (300) erstreckt, wobei der Flansch (200) eine Auflagefläche (305) zum Anordnen um die äußere Oberfläche (113) der Hauptwelle (107) herum und eine Befestigungsfläche (303) zum Anordnen in Kontakt mit einer nach innen gerichteten Oberfläche (201) des zentralen Vorsprungs (120) aufweist;
wobei ein oberster Bereich des Flansches (200) zum Befestigen einer Dichtung (122) zwischen der Hauptwelle (107) und dem zentralen Vorsprung (120) geeignet ist.

2. Lager gemäß Anspruch 1, **dadurch gekennzeichnet, dass** das Lager eine sich von dem scheibenartigen Körper (300) radial nach innen erstreckende ringförmige Schulter (306) aufweist.

3. Lager gemäß Anspruch 1 oder 2, **dadurch gekennzeichnet, dass** ein oberster Bereich des Flansches (200) einen ringförmigen Halssitz (506) zum Befestigen der Dichtung (122) zwischen der Hauptwelle (107) und dem zentralen Vorsprung (120) umfasst.

4. Lager gemäß Anspruch 1, **dadurch gekennzeichnet, dass** die Auflagefläche sich radial nach innen in einer Richtung von einem unteren zu einem oberen Ende der Hauptwelle (107) verjüngt.

5. Kreiselbrecher, welcher umfasst:
einen Rahmen (100), welcher einen inneren Brechbereich (104) definiert, wobei der Rahmen (100) einen oberen Rahmen (101) und einen unteren Rahmen (102) aufweist;
wobei der obere Rahmen (101) einen Armsternträger (114) mit einem zentralen Vorsprung (120) aufweist;
eine drehbar gelagerte Hauptwelle (107), welche sich durch den Brechbereich (104) erstreckt;
wobei ein oberer Bereich der Hauptwelle (107) innerhalb des zentralen Vorsprungs (120) gehaltert ist; und
ein ringförmiges Lager (123) gemäß einem der vorherigen Ansprüche, welches an der untersten Fläche (124) des zentralen Vorsprungs (120) angebracht ist, sodass es unterhalb des zentralen Vorsprungs (120) angeordnet ist und sich um die äußere Oberfläche (113) der Hauptwelle (107) herum erstreckt.

6. Brecher gemäß Anspruch 5, **dadurch gekennzeichnet, dass** das Lager (123) in Kontakt mit der untersten Fläche (124) lösbar an dem zentralen Vorsprung (120) befestigt ist.

7. Brecher gemäß Anspruch 6, **dadurch gekennzeichnet, dass** der Brecher eine Vielzahl von Schrauben (501) zum Befestigen des Lagers (123) an der untersten Fläche (124) des zentralen Vorsprungs (120) aufweist.

8. Brecher gemäß einem der Ansprüche 5 bis 7, **dadurch gekennzeichnet, dass** das Lager (123) an der untersten Oberfläche (124) des zentralen Vorsprungs (120) direkt angebracht ist.

9. Brecher gemäß einem der Ansprüche 5 bis 8, **dadurch gekennzeichnet, dass** das Lager (123) bezüglich einer sich durch das Gerüst (100) erstreckenden Längsachse (115) am axial untersten Ende des zentralen Vorsprungs (120) angeordnet ist.

10. Brecher gemäß einem der Ansprüche 5 bis 9, **dadurch gekennzeichnet, dass** zumindest ein Teil der Auflagefläche (304, 305) quer zu der äußeren Oberfläche (113) der Hauptwelle (107) ausgerichtet ist und in Richtung von einem unteren Bereich (118) zu einem oberen Bereich (117) der Hauptwelle (107) nach innen geneigt ist.

11. Brecher gemäß einem der Ansprüche 5 bis 10, **dadurch gekennzeichnet, dass** der Brecher zudem eine obere Buchse (112) und eine Dichtung (122) umfasst, wobei die Dichtung (122) in axialer Richtung der Hauptwelle (107) zwischen der oberen Buchse (112) und dem ringförmigen Lager (123) angeordnet ist.

## Revendications

1. Palier annulaire de concasseur giratoire (123) pouvant être monté au niveau d'une face annulaire inférieure (124) d'un bossage central (120) d'une araignée (114) et autour d'une surface extérieure (113) d'une région supérieure d'un arbre principal de concasseur giratoire (107), le palier (123) comprenant :
un corps en forme de disque annulaire (300) destiné à dépasser radialement vers l'extérieur par rapport à l'arbre principal (107), le corps (300) ayant une surface de palier (304) pour un positionnement autour de la surface extérieur (113) de l'arbre principal (107) et une surface de montage (301) pour un montage au niveau de la face annulaire inférieure (124) du bossage central (120) ;
une pluralité de trous (307) écartés sur la circonférence autour et s'étendant à travers le corps (300) par rapport à la surface de montage (301) pour recevoir des boulons d'ancrage pour une fixation libérable du palier (123) sur le bossage central (120) ;
**caractérisé par** :
un rebord (200) positionné en direction d'un rayon intérieur du palier (123) et dépassant et s'étendant transversalement ou perpendiculairement par rapport au corps en forme de disque (300), le rebord (200) ayant une surface de palier (305) pour un positionnement autour de la surface extérieure (113) de l'arbre principal (107) et une surface de montage (303) pour un positionnement en contact avec une surface orientée vers l'intérieur (201) du bossage central (120) :
dans lequel une région supérieure du rebord (200) est destinée à monter une garniture d'étanchéité (122) entre l'arbre principal (107) et le bossage central (120).

2. Palier selon la revendication 1 comprenant un épaulement annulaire (306) s'étendant radialement vers l'intérieur par rapport au corps en forme de disque (300).

3. Palier selon les revendications 1 ou 2 dans lequel une région supérieure du rebord (200) comprend un col de réception annulaire (506) destiné à monter la garniture d'étanchéité (122) entre l'arbre principal (107) et le bossage central (120).

4. Palier selon la revendication 1 dans lequel la surface de palier s'incline radialement vers l'intérieur dans une direction d'une extrémité inférieure à une extrémité supérieure de l'arbre principal (107).

5. Concasseur giratoire comprenant :
un châssis (100) définissant une zone de concassage interne (104), le châssis (100) ayant un châssis supérieur (101) et un châssis inférieur (102) ;
le châssis supérieur (101) ayant une araignée de support (114) avec un bossage central (120) ;
un arbre principal monté avec possibilité de rotation (107) s'étendant à travers la zone de concassage (104), une région supérieure de l'arbre supérieur (107) étant supportée dans le bossage central (120) ; et
un palier annulaire (123) selon l'une quelconque des revendications précédentes monté au niveau de la surface inférieure (124) du bossage central (120) pour être positionné en dessous du bossage central (120) et s'étendant autour de la surface extérieure (113) de l'arbre principal (107).

6. Concasseur selon la revendication 5 dans lequel le palier (123) est monté avec possibilité de libération en contact avec la surface inférieure (124) sur le bossage central (120).

7. Concasseur selon la revendication 6 comprenant une pluralité de boulons (501) pour fixer le palier (123) sur la surface inférieure (124) et le bossage central (120).

8. Concasseur selon l'une quelconque des revendications 5 à 7 dans lequel le palier (123) est fixé directement sur la surface inférieure (124) du bossage central (120).

9. Concasseur selon l'une quelconque des revendications 5 à 8 dans lequel le palier (123) est positionné au niveau d'une extrémité axialement la plus basse du bossage central (120) par rapport à un axe longitudinal (115) s'étendant à travers le châssis (100).

10. Concasseur selon l'une quelconque des revendications 5 à 9 dans lequel au moins une partie de la surface de palier (304, 305) est alignée transversalement par rapport à la surface extérieure (113) de l'arbre principal (107) et est inclinée vers l'intérieur dans une direction à partir d'une région intérieure (118) jusqu'à une région supérieure (117) de l'arbre principal (107).

11. Concasseur selon l'une quelconque des revendications 5 à 10 comprenant en outre une douille supérieure (112) et une garniture d'étanchéité (122), la garniture d'étanchéité (122) étant positionnée, dans la direction axiale de l'arbre principal (107) à une position intermédiaire entre la douille supérieure (112) et le palier annulaire (123).
